# FASCICULE DE BREVET EUROPEEN

(11) **EP 1 517 426 B1**
(45) Date de publication et mention de la délivrance du brevet: **18.07.2012**
(21) Numéro de dépôt: 04300574.3
(22) Date de dépôt: 03.09.2004
(51) Int. Cl.: H02K 3/52, H02K 1/14

(54) **Machine électrique tournante comportant un stator et dispositions pour la fixation des isolants sur celui-ci.**
Rotationsmaschine mit einem Stator und einer Vorrichtung zum Fixieren der Isolierelemente auf diesem Stator
Rotating machine with a stator and means for fixing isolating element on that sator

(30) Priorité: 10.09.2003 FR 0310646
(43) Date de publication de la demande: 23.03.2005
(73) Titulaire: MOTEURS LEROY-SOMER, 16000 Angoulême (FR)
(72) Inventeur: JOURDAN, Dominique, 69230, Saint Genis Laval (FR)
(74) Mandataire: Tanty, François

(56) Documents cités:
- EP-A- 0 133 858
- EP-A- 1 317 048
- WO-A-03/065544
- US-A- 4 629 918
- US-A1- 2001 048 262

## Description

La présente invention concerne les machines électriques tournantes comportant un stator dont le circuit magnétique est formé d'un assemblage de secteurs, et plus particulièrement, mais non exclusivement, les servomoteurs.

Un stator de machine électrique comporte, d'une manière générale, outre le circuit magnétique, un circuit électrique et un système d'isolation.

Le circuit électrique comporte par exemple une pluralité de bobines associées aux secteurs, ces bobines étant par exemple bobinées sur les secteurs avant l'assemblage de ces derniers.

Chaque secteur comporte, de manière conventionnelle, un paquet de tôles magnétiques superposées, revêtues chacune d'un vernis isolant.

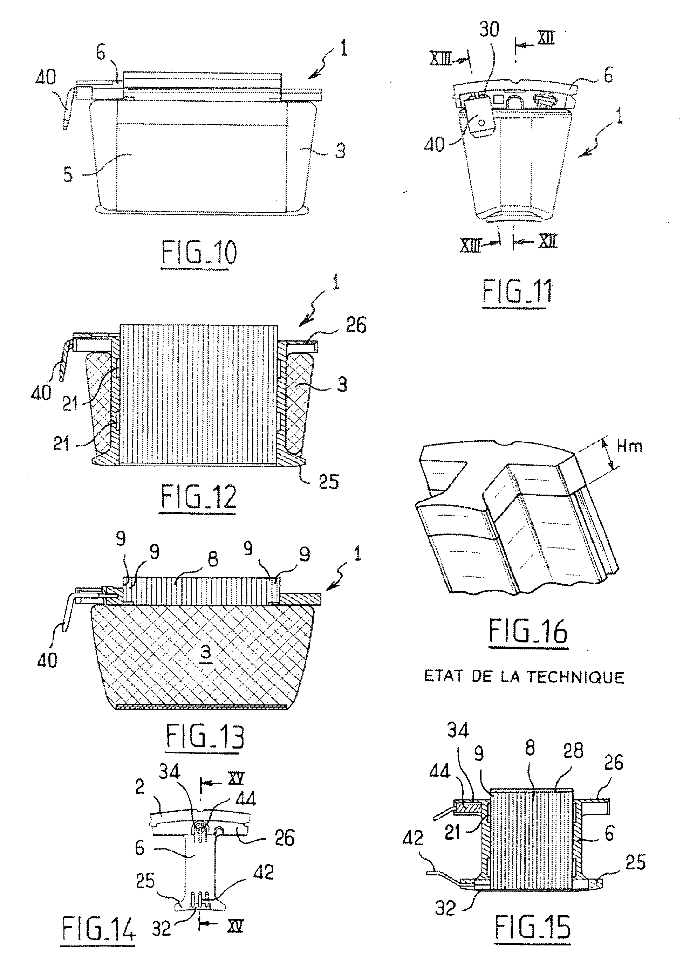

Le système d'isolation contribue à isoler électriquement le circuit magnétique du circuit électrique et comporte généralement des feuilles isolantes disposées entre les secteurs et les bobines. Le système d'isolation peut comporter en outre, comme illustré à la figure 16, des isolants d'extrémité, constitués par des pièces massives en un matériau isolant, qui sont collées aux extrémités axiales des secteurs. La dimension axiale Hₘ de ces isolants d'extrémité mesurée à leur périphérie est imposée par les normes relatives à la conception et à la fabrication des machines électriques, et ne peut être réduite librement pour diminuer l'encombrement axial de la machine. Or, le système d'isolation constitue une partie non active de la machine dont il est souhaitable de minimiser le volume pour augmenter la puissance massique de la machine.

On connaît par la demande internationale WO 03/065544 une machine pourvue d'un isolant d'extrémité comportant une jupe extérieure recouvrant les tôles formant le secteur correspondant, la jupe recouvrant des tôles de plus grande taille formant la dent du secteur. Cette machine correspond au préambule de la revendication 1.

La demande EP-A2-1 317 048 porte sur un stator de machine électrique comportant des secteurs, chaque secteur comportant deux bobinages. Les isolants d'extrémité de ces secteurs sont munis de jupes qui recouvrent les tôles des secteurs en totalité.

L'invention vise à améliorer encore les performances électriques des machines électriques tournantes, et notamment à augmenter la puissance massique.

Elle y parvient grâce à une machine électrique tournante telle que définie dans la revendication 1.

Dans une réalisation suivant l'invention, chaque isolant d'extrémité comporte une jupe agencée pour recouvrir la portion d'extrémité correspondante, cette jupe ayant une épaisseur correspondant sensiblement à la largeur de l'épaulement associé. L'encoche est ainsi de section sensiblement constante sur toute la longueur du secteur, et aussi large que possible.

La jupe précitée présente ainsi une surface extérieure s'étendant sensiblement dans l'alignement des faces latérales du secteur associé, lorsque l'isolant d'extrémité est fixé sur ce secteur. Cela permet à chaque encoche du stator formée entre les dents de deux secteurs successifs de présenter une section transversale sensiblement constante le long de l'axe de la machine, y compris entre les isolants d'extrémité. De ce fait, le coefficient de remplissage de l'encoche est optimum.

L'invention permet d'obtenir une isolation électrique satisfaisant aux normes tout en ayant des secteurs occupant un certain volume à l'intérieur des isolants d'extrémité, augmentant ainsi la puissance massique de la machine pour un encombrement donné, par comparaison aux machines existantes pour lesquelles la dimension axiale des isolants d'extrémité s'ajoute entièrement à celle des secteurs.

Autrement dit, grâce à l'invention, la partie du secteur individuel qui est engagée dans l'isolant d'extrémité peut constituer une partie active de la machine sans pour autant empiéter sur la dimension utile de l'isolant d'extrémité dans l'air à sa périphérie.

Les isolants d'extrémité peuvent avantageusement être réalisés de manière à participer au maintien des bobines sur les secteurs, et chaque isolant d'extrémité peut notamment comporter une gorge formée entre des extensions radialement intérieure et extérieure, gorge dans laquelle s'engage la bobine associée au secteur correspondant.

Chaque isolant d'extrémité peut être agencé pour s'engager avec ou sans friction sur l'extrémité axiale du secteur correspondant. Un engagement avec friction peut permettre d'éviter une opération de collage de l'isolant d'extrémité sur le secteur.

Chaque secteur peut comporter, à une extrémité axiale au moins, une portion d'extrémité plus étroite, qui peut être recouverte au moins partiellement par un isolant d'extrémité correspondant. Cette portion d'extrémité plus étroite peut être délimitée par des épaulements sur des côtés opposés du secteur.

Les portions d'extrémité plus étroites qui s'engagent dans les isolants d'extrémité peuvent être formées par des tôles ayant des dimensions réduites par rapport aux tôles situées entre les portions d'extrémité. Chaque secteur peut ainsi comporter un empilage d'un premier type de tôles, et de part et d'autre de cet empilage, deux empilages d'un second type de tôles, destinés à former les portions d'extrémité précitées.

Les tôles formant les secteurs peuvent comporter, sur leurs faces en regard, des reliefs pouvant coopérer de manière à maintenir les tôles assemblées. Chaque tôle peut ainsi comporter sur une face une forme mâle et sur la face opposée une forme femelle, les formes mâle et femelle ayant été formées par exemple simultanément par emboutissage de la tôle.

Chaque secteur peut être engagé dans deux isolants d'extrémité placés chacun à une extrémité axiale de celui-ci.

La machine peut comporter des feuilles isolantes entourant totalement ou partiellement chacune une partie d'une bobine qui s'étend axialement le long du secteur correspondant.

Les feuilles isolantes peuvent être pincées entre les isolants d'extrémité et les portions d'extrémité des secteurs correspondants, un tel pincement pouvant être suffisant pour les maintenir en place sur les secteurs jusqu'à l'opération de bobinage des secteurs le cas échéant. Les feuilles isolantes peuvent aussi être collées sur les isolants d'extrémité et recouvrir ceux-ci.

L'isolant d'extrémité peut ne pas s'étendre radialement jusqu'à la surface radialement la plus extérieure du secteur correspondant.

Deux secteurs consécutifs peuvent comporter, sur leurs faces en contact, des reliefs ayant des formes complémentaires permettant un emboîtement.

Au moins un isolant d'extrémité peut comporter un logement recevant au moins partiellement l'un d'un connecteur électrique, d'une sonde thermique et d'une sonde à effet Hall. Cela peut permettre de simplifier le montage sur le stator des connecteurs électriques servant à alimenter les bobines ainsi que, le cas échéant, d'au moins une sonde à effet Hall éventuelle, notamment lorsque le rotor comporte des aimants permanents.

Chaque isolant d'extrémité est avantageusement réalisé par moulage de matière plastique, d'un seul tenant de préférence.

L'invention a encore pour objet, indépendamment ou en combinaison avec ce qui précède, un isolant d'extrémité pour un secteur d'un stator d'une machine électrique tournante, cet isolant d'extrémité comportant un espace apte à recevoir une extrémité axiale dudit secteur.

L'invention pourra être mieux comprise à la lecture de la description détaillée qui va suivre, d'exemples de réalisation non limitatifs de celle-ci, et à l'examen du dessin annexé, sur lequel :
- la figure 1 est une coupe transversale, partielle et schématique, d'une machine conforme à un exemple de mise en oeuvre de l'invention,
- la figure 2 est une coupe longitudinale, schématique et partielle, de plusieurs tôles empilées d'un secteur individuel,
- la figure 3 est une coupe longitudinale, schématique, d'un secteur de la figure 1, la bobine associée à ce secteur étant enlevée,
- la figure 4 est une autre coupe longitudinale du secteur, selon IV-IV de la figure 3,
- la figure 5 est une coupe transversale selon V-V de la figure 3,
- la figure 6 est une vue schématique, en perspective, d'un secteur pourvu d'un bobinage et d'isolants d'extrémité conformes à un autre exemple de mise en oeuvre de l'invention,
- la figure 7 est une vue éclatée, schématique et en perspective, du secteur de la figure 6 et de ses isolants d'extrémité,
- les figures 8 et 9 représentent isolément, en perspective selon des angles de vue différents et d'une manière schématique, un isolant d'extrémité des figures 6 et 7,
- les figures 10 et 11 sont des vues respectivement de côté et de face d'un secteur bobiné et isolé, avec au moins un connecteur électrique porté par l'isolant d'extrémité,
- la figure 12 est une coupe longitudinale dans un plan médian, schématique et partielle, selon XII-XII de la figure 11,
- la figure 13 est une section longitudinale schématique et partielle selon XIII-XIII de la figure 11,
- la figure 14 est une vue de face d'un isolant d'extrémité portant des sondes de température et à effet Hall,
- la figure 15 est une coupe schématique et partielle, dans un plan médian longitudinal, selon XV-XV de la figure 14, et
- la figure 16 représente, en perspective et de manière schématique, un isolant d'extrémité connu.

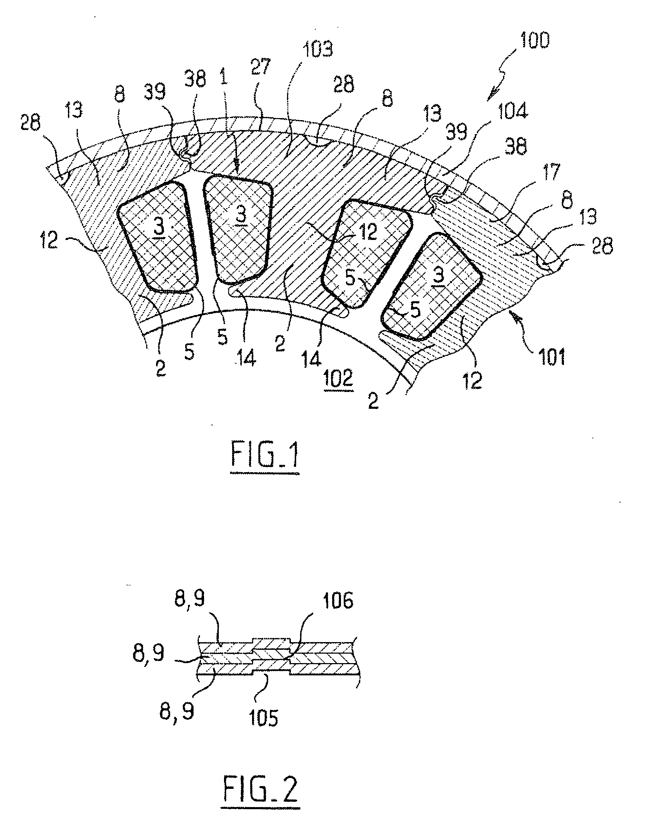

On a représenté à la figure 1 une machine électrique tournante 100 conforme à l'invention, comportant un stator 101 et un rotor 102 tournant à l'intérieur du stator 101.

Le rotor 102 n'a pas été représenté en détail, pouvant être de tout type connu capable d'être entraîné en rotation par le stator 101. La machine électrique peut notamment être synchrone et le rotor 102 comporter des aimants permanents.

Le stator 101 comporte un circuit magnétique 1 comportant une pluralité de dents 12 recevant chacune une bobine correspondante 3, le stator étant dit «bobiné sur dents » ou encore du type « concentrated winding », selon la terminologie anglo-saxonne.

Dans l'exemple considéré, chaque dent 12 comporte, du côté du rotor 102, des épanouissements polaires 14.

Le circuit magnétique 1 du stator 101 comporte encore une culasse 103 s'étendant circonférenciellement, et à laquelle se raccordent les dents 12 à leur base.

Conformément à l'invention, les dents 12 sont formées chacune par un secteur 2, tous les secteurs 2 étant dans l'exemple considéré identiques et assemblés à l'intérieur d'un carter 104, ce dernier comportant une paroi cylindrique de révolution, d'axe confondu avec l'axe de rotation du rotor et perpendiculaire au plan de coupe de la figure 1.

Chaque secteur 2 comporte ainsi une partie périphérique 13 formant une portion de la culasse 103 et qui s'étend dans le sens circonférentiel de part et d'autre de la dent 12, au contact du carter 104.

Dans l'exemple illustré, cette partie périphérique 13 comporte à ses extrémités circonférentielles des reliefs respectifs 38 et 39 ayant des formes complémentaires, ces reliefs étant destinés à coopérer par complémentarité de formes avec les reliefs correspondants des secteurs adjacents, de façon à améliorer la cohésion des secteurs 2 entre eux à l'intérieur du carter 104.

Le relief 38 se présente par exemple sous la forme d'une dent ayant une section transversale sensiblement triangulaire, comme on peut le voir sur la figure 1, et le relief 39 sous la forme d'une rainure ayant une section transversale sensiblement complémentaire de celle du relief 38.

Chaque secteur 2 peut comporter, sur sa face radialement extérieure et dans sa région médiane, une rainure longitudinale 28 qui pourrait être supprimée. L'ensemble des secteurs peut être inséré à force dans le carter 104.

Bien entendu, les secteurs 2 peuvent être assemblés autrement encore, notamment par collage.

Chaque secteur 2 est formé par un empilement selon un axe longitudinal X de tôles magnétiques 8 d'un premier type et de tôles magnétiques 9 d'un deuxième type, toutes les tôles 8 étant disposées entre les tôles 9 et ces dernières formant les portions d'extrémité 10 des secteurs. Les tôles 8, 9 peuvent être assemblées de manière à constituer un ensemble unitaire, l'assemblage étant obtenu par exemple grâce à des reliefs ayant des formes complémentaires et présents respectivement sur les faces opposées de chaque tôle 8 et de chaque tôle 9.

Chaque tôle 8 ou 9 peut notamment comporter, comme illustré à la figure 2, au moins un évidement 105 sur une face et un bossage correspondant 106 sur la face opposée, ce bossage 106 étant adapté à s'engager avec friction dans l'évidement 105 d'une tôle adjacente, voire à s'encliqueter dans celui-ci.

Dans les machines tournantes connues, dont le stator est réalisé à partir de secteurs, toutes les tôles d'un secteur ont la même forme d'une extrémité axiale à l'autre du secteur.

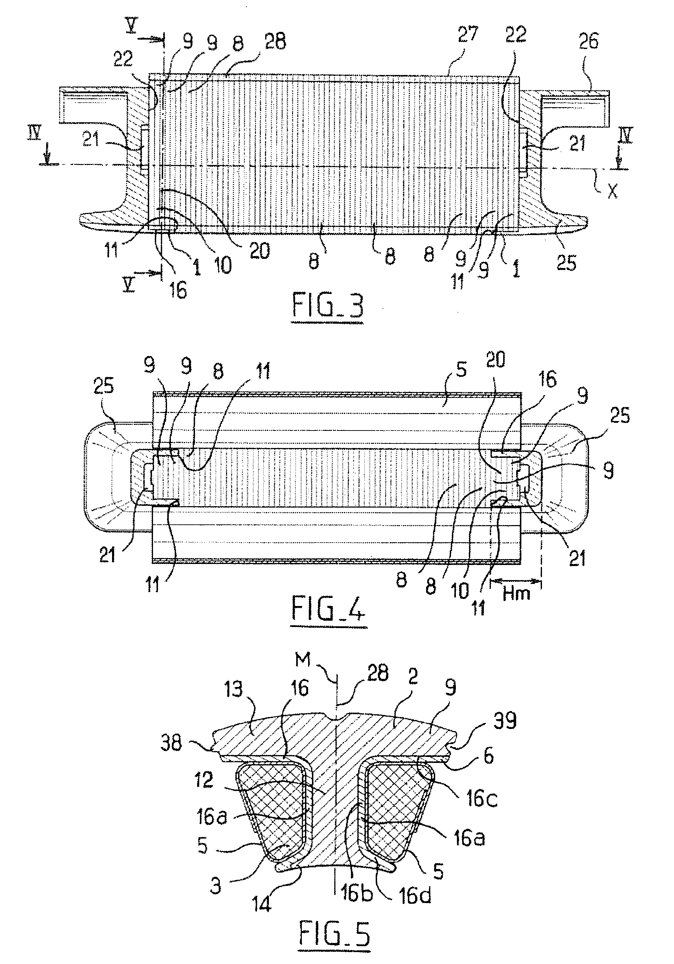

Dans l'invention, les tôles 9 sont plus étroites que les tôles 8 au niveau de la partie destinée à former la dent 12 correspondante, ainsi que sur les côtés de la partie périphérique 13 et des épanouissements polaires 14 qui se font face, comme on peut le comprendre à l'examen des figures 3 à 5.

Les différences dans les dimensions entre les tôles 8 et 9 et notamment la moindre largeur des tôles 9 au niveau de la partie destinée à former la dent 12 correspondante permet de ménager à chaque extrémité axiale d'un secteur 2 sur des côtés opposés deux épaulements 11, comme on peut le voir sur la figure 4 notamment.

Les portions d'extrémité 10 sont destinées à s'engager respectivement dans deux isolants d'extrémité 6.

Ces derniers comportent des jupes 16 venant recouvrir les portions d'extrémité 10, le cas échéant jusqu'à s'appliquer sensiblement par leur bord libre contre les épaulements 11. La butée de l'isolant d'extrémité peut aussi être, et de manière préférentielle, l'extrémité du paquet de tôles et non pas l'épaulement 11.

La jupe 16 d'un isolant d'extrémité 6 comporte deux portions 16a symétriques l'une de l'autre par rapport à un plan médian M s'étendant radialement, comme on peut le voir sur la figure 5.

Chaque portion 16a comporte une partie 16b s'étendant sensiblement le long de la dent 12 et des parties d'extrémité 16c et 16d s'étendant respectivement au contact de la partie périphérique 13 et d'un épanouissement polaire 14.

Ainsi, chaque portion 16a de la jupe 16 s'interpose entre la bobine 3 et la portion d'extrémité 10 du secteur et peut assurer une distance d'isolation dans l'air Hₘ conforme aux normes en vigueur tout en permettant de bénéficier de la présence des tôles 9 à l'intérieur des isolants d'extrémité 6 pour améliorer la puissance massique de la machine.

De plus, grâce à l'invention, les têtes de la bobine 3 sont plus proches des tôles d'extrémité 9, ce qui est favorable à l'amélioration des performances de la machine.

Chaque isolant d'extrémité 6 peut comporter, comme illustré sur la figure 4 notamment, au moins un évidement 21 sur sa face intérieure 22 venant en contact avec les tôles d'extrémité 9, pour recevoir le relief 106 de la dernière tôle 9 à une extrémité axiale du secteur 2.

Bien entendu, la forme de la face intérieure des isolants d'extrémité pourra être adaptée à celle des reliefs présents sur la face de la tôle contre laquelle chaque isolant d'extrémité s'applique.

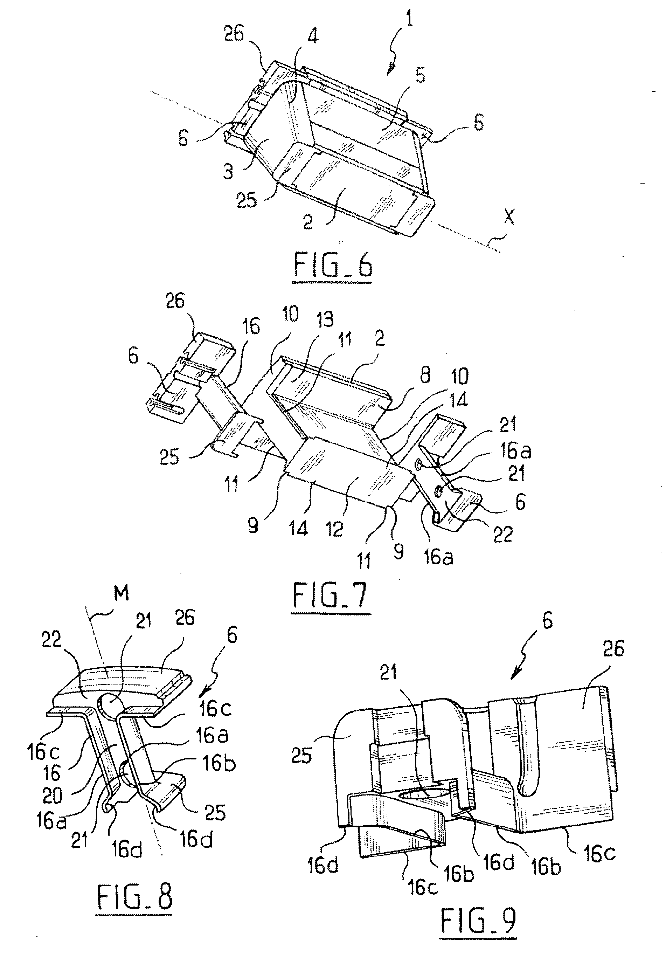

Ainsi, par exemple, les tôles 8, 9 peuvent être maintenues entre elles par deux reliefs complémentaires situés l'un au dessous de l'autre, comme c'est le cas dans l'exemple de réalisation illustré sur les figures 6 à 9, et chaque isolant d'extrémité 6 comporter alors deux évidements 21 correspondants.

En revenant à la figure 3, on peut voir que chaque isolant d'extrémité 6 comporte encore des extensions axiales radialement intérieure 25 et extérieure 26, délimitant entre elles une gorge pour recevoir la tête 4 de la bobine 3 associée.

La présence des extensions 25 et 26 peut faciliter l'opération de bobinage des secteurs 2 avant leur assemblage à l'intérieur du carter 104.

L'extension 26 peut ne pas s'étendre radialement jusqu'à la face 27 radialement la plus extérieure du secteur individuel 2, comme on peut le voir sur la figure 3.

Indépendamment ou en combinaison avec ce qui précède, on peut faire jouer aux isolants d'extrémités un rôle supplémentaire de maintien d'au moins un connecteur électrique ou d'une sonde à effet Hall ou de température.

Un isolant d'extrémité 6 peut ainsi comporter, comme dans l'exemple représenté sur les figures 10 et 11, un logement 30 réalisé dans l'extension 26 pour la fixation d'un connecteur électrique 40 permettant de raccorder la bobine à un conducteur d'alimentation électrique de celle-ci.

L'isolant d'extrémité 6 peut comporter également un logement 32 ménagé dans l'extension 25 pour le positionnement d'une sonde à effet Hall 42, comme illustré sur les figures 14 et 15.

L'isolant d'extrémité 6 peut encore comporter un logement 34 permettant la fixation d'une sonde de température 44.

Dans toute la description, y compris les revendications, l'expression « comportant un » signifie « comportant au moins un », sauf si le contraire est spécifié.

## Revendications

1. Machine électrique tournante comportant un stator, ce dernier comportant :
- des secteurs (2) formés chacun par un empilage de tôles (8, 9) et ayant chacun deux extrémités axiales (10), les secteurs comportant, à une extrémité axiale (10) au moins, une portion d'extrémité plus étroite destinée à former une dent, délimitée axialement par deux épaulements (11) situés sur des côtés opposés du secteur.
- des isolants d'extrémité (6) placés chacun à une extrémité axiale (10) d'un secteur individuel correspondant (2),
chaque isolant d'extrémité (6) comportant un espace (20) dans lequel s'engage une extrémité axiale (10) du secteur individuel correspondant (2) et comportant une jupe (16) agencée pour recouvrir la portion d'extrémité du secteur
**caractérisée par le fait que** la jupe a une épaisseur correspondant sensiblement à la largeur de l'épaulement correspondant, de façon à ce que l'encoche du stator formée entre les dents de deux secteurs (2) successifs soit de section sensiblement constante sur toute la longueur du secteur.

2. Machine selon la revendication précédente, **caractérisée par le fait que** chaque isolant d'extrémité (6) est agencé pour s'engager avec friction sur l'extrémité axiale (10) du secteur (2) correspondant.

3. Machine selon la revendication précédente, **caractérisée par le fait que** chaque isolant d'extrémité (6) est agencé pour s'engager librement sur l'extrémité axiale (10) du secteur (2) correspondant.

4. Machine selon l'une quelconque des revendications précédentes, **caractérisée par le fait que** les tôles (8, 9) formant les secteurs (2) comportent, sur leurs faces en regard, des reliefs coopérants.

5. Machine selon l'une quelconque des revendications précédentes, **caractérisée par le fait que** chaque secteur (2) est engagé dans deux isolants d'extrémité (6) placés chacun à une extrémité axiale (10) du secteur.

6. Machine selon l'une quelconque des revendications précédentes, **caractérisée par le fait qu'**elle comporte des bobines (3) et des feuilles isolantes (5) entourant totalement ou partiellement chacune une partie d'une bobine (3) qui s'étend axialement le long du secteur correspondant.

7. Machine selon la revendication précédente, **caractérisée par le fait que** les feuilles isolantes (5) sont pincées entre les isolants d'extrémité (6) et des portions d'extrémité (10) des secteurs (2) correspondants, ou recouvrent l'isolant d'extrémité par collage.

8. Machine selon l'une quelconque des revendications précédentes, **caractérisée par le fait que** chaque isolant d'extrémité (6) comporte une gorge, formée entre des extensions radialement intérieure (25) et extérieure (26), et dans laquelle s'engage une tête (4) de la bobine (3) associée au secteur correspondant.

9. Machine selon l'une quelconque des revendications précédentes, **caractérisée par le fait que** chaque isolant d'extrémité (6) ne s'étend pas radialement jusqu'à la surface (27) radialement la plus extérieure du secteur correspondant (2).

10. Machine selon l'une quelconque des revendications précédentes, **caractérisée par le fait que** deux secteurs consécutifs (2) comportent, sur leurs faces en contact, des reliefs ayant des formes complémentaires (38, 39) permettant un emboîtement.

11. Machine selon l'une quelconque des revendications précédentes, **caractérisée par le fait qu'**un isolant d'extrémité (6) au moins comporte un logement (30) recevant au moins partiellement l'un d'un connecteur électrique (40), d'une sonde thermique (44) et d'une sonde à effet Hall (42).

12. Machine selon l'une quelconque des revendications précédentes, **caractérisée par le fait que** chaque isolant d'extrémité est réalisé d'une seule pièce par moulage de matière plastique.

## Claims

1. An electric rotating machine with a stator, the latter comprising:
- sectors (2), each formed by a stack of sheets (8, 9) and each having two axial ends (10), the sectors having, at least at one axial end (10), a narrower end portion designed to form a tooth which is delimited in axial direction by two shoulders (11) located on opposite sides of the sector,
- end insulators (6), each placed at an axial end (10) of a corresponding individual sector (2),
each end insulator (6) having a space (20), into which an axial end (10) of the corresponding individual sector (2) is fitted, and having a skirt (16) disposed so as to cover the end portion of the sector,
**characterized in that** the skirt has a thickness substantially corresponding to the width of the corresponding shoulder so that the stator slot formed between the teeth of two successive sectors (2) has a substantially constant cross-section over the full length of the sector.

2. A machine according to the preceding claim, **characterized in that** each end insulator (6) is designed to be friction fitted onto the axial end (10) of the corresponding sector (2).

3. A machine according to the preceding claim, **characterized in that** each end insulator (6) is designed to fit freely onto the axial end (10) of the corresponding sector (2).

4. A machine according to any one of the preceding claims, **characterized in that** the sheets (8, 9) forming the sectors (2) have cooperating reliefs or projections on their facing surfaces.

5. A machine according to any one of the preceding claims, **characterized in that** each sector (2) is fitted into two end insulators (6), each end insulator (6) being placed at an axial end (10) of the sector.

6. A machine according to any one of the preceding claims, **characterized in that** it has coils (3), and also insulating sheets (5) each of which completely or partly surround a part of a coil (3) that extends in axial direction along the corresponding sector.

7. A machine according to the preceding claim, **characterized in that** the insulating sheets (5) are gripped between the end insulator (6) and end portions (10) of the corresponding sectors (2), or are glued so as to cover the end insulator.

8. A machine according to any one of the preceding claims, **characterized in that** each end insulator (6) has a groove, formed between radially inner (25) and outer (26) extensions, into which a head (4) of the coil (3) associated with the corresponding sector is fitted.

9. A machine according to any one of the preceding claims, **characterized in that** each end insulator (6) does not extend in radial direction as far as the radially outermost surface (27) of the corresponding sector (2).

10. A machine according to any one of the preceding claims, **characterized in that** two consecutive sectors (2) have, on their contact faces, reliefs or projections having complementary shapes (38, 39) allowing them to be fitted together.

11. A machine according to any one of the preceding claims, **characterized in that** at least one end insulator (6) has a housing (30) at least partly receiving one of an electric connector (40), a thermal probe (44) or a Hall effect probe (42).

12. A machine according to any one of the preceding claims, **characterized in that** each end insulator (6) is made in a single piece by the moulding of a plastic material.

## Patentansprüche

1. Elektrische Rotationsmaschine mit einem stator, wobei letzterer umfasst:
Sektoren (2), die jeweils durch einen Blechstapel (8, 9) gebildet sind und jeweils zwei axiale Enden (10) aufweisen, wobei die Sektoren mindestens an einem axialen Ende (10) einen zum Bilden eines Zahns vorgesehenen schmaleren Endteil aufweisen, der axial 1. durch zwei an gegenüberliegenden Seiten des Sektors angeordnete Schultern (11) abgegrenzt ist,
Endisolationen (6), die jeweils an einem axialen Ende (10) eines entsprechenden individuellen Sektors (2) angeordnet sind,
wobei jede Endisolation (6) einen Zwischenraum (20), in den ein axiales Ende (10) des entsprechenden individuellen Sektors (2) eingreift, und einen Mantel (16) aufweist, der dazu ausgebildet ist, den Endteil des Sektors abzudecken,
**dadurch gekennzeichnet, dass** der Mantel eine Dicke aufweist, die im Wesentlichen der Bereite der entsprechenden Schulter (11) entspricht, so dass die Kerbe des Stators, die zwischen den Zähnen zweier aufeinanderfolgender Sektoren (2) gebildet ist, über die ganze Länge des Sektors einen im Wesentlichen konstanten Querschnitt aufweist.

2. Maschine nach dem vorhergehenden Anspruch, **dadurch gekennzeichnet**, dans jede Endisolation (6) so angeordnet ist, dass sie mit Reibung an dem axialen Ende (10) des entsprechenden Bereichs (2) angreift.

3. Maschine nach dem vorhergehenden Anspruch, **dadurch gekennzeichnet, dass** jede Endisolation (6) so angeordnet ist, dass sie frei an dem axialen Ende (10) des entsprechenden Sektors (2) abgreift.

4. Maschine nach einem der vorhergehenden Ansprüche, **dadurch gekennzeichnet, dass** die die Sektoren (2) bildenden Bleche (8, 9) an ihren gegenüberliegenden Seiten zusammenwirkende Reliefs ausweisen.

5. Maschine nach einem der vorhergehenden Ansprüche, **dadurch gekennzeichnet, dass** jeder Sektor (2) an zwei Endisolationen (6) angreift, die jeweils an einem axialen Ende (10) des Sektors angeordnet sind.

6. Maschine nach einem der vorhergehenden Ansprüche, **dadurch gekennzeichnet, dass** sie Spulen (3) und Isolierblätter (5) umfasst, die ganz oder teilweise jeden Teil einer axial entlang dem entsprechenden Sektor verlaufenden Spule (3) umgehen.

7. Maschine nach dem vorhergehenden Anspruch, **dadurch gekennzeichnet, dass** die Isolierblätter (5) zwischen den Endisolationen (6) und den Endteilen (10) der entsprechenden Sektoren (2) eingeklemmt sind, oder die Endisolationen durch Kleben überdeckten.

8. Maschine nach einem der vorhergehenden Ansprüche, **dadurch gekennzeichnet, dass** jede Endisolation (6) eine zwischen den inneren (25) und den äußeren (26) radialen Ausdehnungen gebildete Kehle aufweist, in die ein Kopf (4) der dem entsprechenden Sektor zugeordneten Spule (3) eingreift.

9. Maschine nach einem der vorhergehenden Ansprüche, **dadurch gekennzeichnet, dass** jede Endisolation (6) sich radial nicht zur äußersten Radialfläche (27) des entsprechenden Sektors (2) erstreckt.

10. Maschine nach einem der vorhergehenden Ansprüche, **dadurch gekennzeichnet, dass** zwei aufeinanderfolgende Sektoren (2) auf ihren Kontaktseite Reliefs mit komplementären Formen (38, 39) aufweisen, die eine Verbindung ermöglichten.

11. Maschine nach einem der vorhergehenden Ansprüche, **dadurch gekennzeichnet, dass** eine Endisolation (6) mindestens ein Gehäuse (30) umfasst, in dem mindestens teilweise ein elektrischer verbindet (40), ein Temperatursensor (44) oder eine Hall-Sonde (42) untergebracht ist.

12. Maschine nach einem der vorhergehenden Ansprüche, **dadurch gekennzeichnet, dass** jede Endisolation einstückig durch Gießen von Kunststoffmaterial gebildet ist.
